# EUROPEAN PATENT SPECIFICATION

(11) **EP 1 156 321 B1**
(45) Date of publication and mention of the grant of the patent: **22.12.2004**
(21) Application number: 99973123.5
(22) Date of filing: 08.09.1999
(51) Int. Cl.: G01N 21/88, G01N 21/95

(54) **METHOD FOR CHECKING A SURFACE TO BE ANALYSED AND SCANNING SURFACE-ANALYSER**
VERFAHREN ZUM PRÜFEN EINER ZU ANALYSIERENDEN OBERFLÄCHE UND SCANNER ZUR ANALYSE VON OBERFLÄCHEN
PROCEDE DE CONTROLE D'UNE SURFACE A ANALYSER ET ANALYSEUR DE SURFACE A BALAYAGE

(30) Priority: 30.11.1998 RU 98121268
(43) Date of publication of application: 21.11.2001
(73) Proprietor: ASM INTERNATIONAL N.V., 3720 AC Bilthoven (NL)
(72) Inventor: ASM INTERNATIONAL N.V., 3720 AC Bilthoven (NL)
(74) Representative: van Westenbrugge, Andries
(86) International application number: PCT/RU1999/000328
(87) International publication number: WO 2000/033055

(56) References cited:
- DE-A1- 3 626 724
- GB-A- 1 514 921
- SU-A1- 1 786 406
- US-A- 4 079 944
- US-A- 4 314 763
- US-A- 4 655 592
- US-A- 4 707 815
- ALFENDORFER H. ET AL.: 'Unpatterned surface inspection for next-generation devices' SOLID STATE TECHNOLOGY, August 1996, pages 93 - 99, XP000620119

## Description

### Field of the invention

The present invention relates to the optical instrument engineering and can be used particularly in developing new and improving existing devices for investigating a surface of semiconductor wafers and building devices into the technology equipment, as well as for investigating a uniformity degree of a surface of other articles.

### Background of the invention

During manufacture of semiconductor wafers it is inadmissible for dust particles and other defects to be presented on the surface of semiconductor wafers. It is desirable to reveal such defects as early as possible to remove at once a source of their origin. To solve this problem a method is widely used utilising the known fact that any particle on a smooth surface, or a surface defect causes a scattering of the light incident onto the surface.

For example, a method for monitoring an analysed surface is known from the US Patent ¹ 4314763 (Int.Cl. G 01 N 21/88, 09.02.82), comprising steps of: performing a rotation of the analysed surface about a centre of revolution, forming a light spot on the analysed surface, and sensing a light scattered by the analysed surface using an optical system.

From this US Patent ¹ 4314763 a surface scanning analyser is also known comprising a light source intended for illuminating an analysed surface by a light spot at an angle close to the normal to this analysed surface, a photodetector intended for sensing the light scattered by the analysed surface, and a rotating table for mounting an article with the analysed surface on it and rotating it about an axis of revolution parallel to the normal to the analysed surface.

In this analyser realising the above method the rotating analysed surface moves along a straight line relative to a point in which the light spot is formed on this surface. This is the shortage of the method and analyser realising it since it is necessary to permit a movement of a large object, i.e. the rotating table for mounting a semiconductor wafer (up to 300 mm in diameter) provided with a drive for rotating, which leads to increasing device sizes and cost.

The closest analogue to the claimed invention is a method for monitoring the analysed surface comprised steps of: performing a rotation of an object having the analysed surface about a first centre of revolution; forming a light spot on the analysed surface; sensing separately a light mirror-reflected and scattered by the analysed surface in the incidence point of the light spot (Altendorfer H. et al. "Unpattemed surface inspection for next-generation devices". - Solid State Technology, 1996, v. 39,¹ 8, pp. 93-97).

From the same information source a surface scanning analyser is also known, comprising: a rotating table for mounting on it an object with an analysed surface and for rotating it about its first axis of revolution that is perpendicular to the analysed surface; a light source intended for illuminating the analysed surface by a light spot at an angle close to the normal to the analysed surface; a gathering mirror in the form of a truncated body of revolution formed by revolving an ellipse about a second axis of revolution which is parallel to the first axis of revolution and substantially coincides with the normal to the analysed surface erected in its incidence point of said light spot, said incidence point being in the focus of said truncated body of revolution, which first section plane is located perpendicularly to the second axis of revolution in the immediate proximity to said focus, and a second section plane of the body of revolution is parallel to its first section plane; a photodetector intended for sensing the light scattered from the analysed surface and reflected by the gathering mirror.

In this method a progressive movement of the rotated analysed surface is remained, i.e. as before it is necessary to move a massive object, which leads, as was already mentioned, to increasing the device sizes and cost, hampering substantially to install the device into the technology equipment.

In recent years, in the semiconductor industry, an equipment of the cluster type is developed permitting to perform several technologic operations simultaneously, and ensuring the cleanliness degree that is not obtainable in using the ordinary equipment. An appearance of the new industrial equipment poses the problem to develop a new measurement equipment capable to work in the cluster process conditions. Demands claimed to such devices differs significantly from demands to ordinary devices. One of the most important demands is minimal sizes of the device, which is caused by a small volume of a clean environment inside the cluster module. Since cluster measurement devices are built into each individual module, they must also have a low cost of manufacturing and servicing.

Thus, the object of this invention is to develop such methods for monitoring the analysed surface and a surface scanning analyser that would be free from the indicated drawbacks.

### Summary of the invention

The raised problem is solved with an achievement of the indicated technical result in the next way.

According to one aspect, the invention relates to a method for monitoring an analysed surface comprised steps of: performing a rotation of an object having the analysed surface about a first centre of revolution; forming a light spot on the analysed surface; sensing separately a light mirror-reflected and scattered by the analysed surface in the incidence point of the light spot. In accordance with the present invention, the method includes steps of: performing a movement of the light spot relative to the analysed surface along an arc about a second centre of revolution, which lies off the analysed surface; aligning, at least in one predetermined position, the light spot having an elongated form on the analysed surface with its maximum size along a radius from the first centre of revolution tgrough the centre of the light spot.

A feature of this method is that in the predetermined position the light spot is located substantially in the middle of said analysed surface radius from the first centre of revolution, or the light spot, during its movement along said arc, is turned aside so as to retain its alignment along the radius from the first centre of revolution thought the centre of the light spot all the scanning line.

One more feature of this method is that the light scattered by the analysed surface is gathered using a system of mirrors, one of which is made in the form of a truncated ellipsoid of revolution, which one axis of revolution substantially coincides with the normal to the analysed surface erected in its incidence point of said light spot, said incidence point being in a first focus of said truncated ellipsoid of revolution which first section plane is located perpendicularly to its axis of revolution in the immediate proximity to said first focus, a second section plane of the ellipsoid of revolution being parallel to its first section plane, and another mirror is a flat mirror having an aperture in its centre, arranged at an angle to the axis of revolution of the truncated ellipsoid of revolution, and intended for passing through it the light from the light source to the analysed surface and the light mirror-reflected from it and for reflecting the light scattered by the analysed surface and reflected by the gathering mirror, wherein the light reflected by the flat mirror is passed through a light filter and then diaphragmed in a point corrcsponding to a second focus of said ellipsoid of revolution with regard of said flat mirror.

In the variant of embodiment the feature of this method is that the light scattered by the analysed surface is gathered using a system of mirrors, one of which is made in the form of a truncated paraboloid of revolution, which axis of revolution substantially coincides with the normal to the analysed surface erected in its incidence point of said light spot, said incidence point being in a focus of said truncated paraboloid of revolution which first section plane is located perpendicularly to its axis of revolution in the immediate proximity to said focus, a second section plane of the paraboloid of revolution being parallel to its first section plane, and another mirror is a flat mirror having an aperture in its centre, arranged at an angle to the axis of revolution of the truncated paraboloid of revolution, and intended for passing through it the light from the light source to the analysed surface and the light mirror-reflected from it and for reflecting the light scattered by the analysed surface and reflected by the gathering mirror, wherein the light reflected by the flat mirror is passed through a light filter, gathered using a lens and then diaphragmed.

According to another aspect, the present invention relates to a surface scanning analyser comprising: a rotating table for mounting on it an object with an analysed surface and for rotating it about its first axis of revolution that is perpendicular to the analysed surface; a light source intended for illuminating the analysed surface by a light spot at an angle close to the normal to the analysed surface; a gathering mirror in the form of a truncated body of revolution formed by revolving a second order curve about a second axis of revolution which is parallel to the first axis of revolution and substantially coincides with the normal to the analysed surface erected in its incidence point of said light spot, said incidence point being in the focus of said truncated body of revolution, which first section planc is located perpendicularly to the second axis of revolution in the immediate proximity to said focus, and a second section plane of the body of revolution is parallel to its first section plane; a first light sensing unit intended for sensing the light mirror-reflected from the analysed surface and located close to the light source; a second light sensing unit intended for sensing the light scattered from the analysed surface and reflected by the gathering mirror; a flat mirror having an aperture in its centre, arranged at an angle to the second axis of revolution, and intended for passing through it the light from the light source to the analysed surface and the light mirror-reflected from it to the first light sensing unit and for reflecting the light from the gathering mirror to the second light sensing unit, in accordance with the present invention, the light source, gathering mirror, flat mirror with the aperture, and first and second light sensing units are placed in a housing made with a possibility to rotate about a third axis of revolution being parallel to the first axis of revolution and passing off the object with the analysed surface and/or the rotating table; the light source is mounted so as said light spot having an elongated form on the analysed surface is aligned, at least in one predetermined position, with its maximum size along a radius from the first centre of revolution via the light spot.

A feature of this analyser is that the first light sensing unit is a light absorber or a photodetector to determine the presence of non-scattering defects on the analysed surface.

Another feature of this analyser is that the second light sensing unit is intended for sensing the light reflected from the flat mirror.

One more feature of this analyser is that the body of revolution of the gathering mirror is an ellipsoid of revolution in which second focus with regard of reflecting from the flat mirror a diaphragm is mounted intended for passing through it the light reflected from the flat mirror to the second light sensing unit. In so doing a light filter can be mounted between the flat mirror and the diaphragm.

A feature in another variant is that the body of revolution of the gathering mirror is a paraboloid of revolution, and a gathering lens and diaphragm are mounted between the flat mirror and the second light sensing unit, intended for gathering and passing through them the light reflected from the flat mirror to the second light sensing unit. In so doing a light filter can mounted between the flat mirror and the gathering lens.

One more feature of this analyser is that it further comprises a drive for rotating the housing to enable a possibility for moving the housing over the analysed surface at least to one side from its centre of revolution.

Yet one more feature of this analyser is that in said predetermined position of the housing, said light spot is located substantially in the middle of said analysed surface radius from the centre of its revolving, or in that the drive for rotating the housing is provided with means for measuring a rotating angle of the housing, and the light source is provided with means for correcting a position, which is intended for turning aside the light source in accordance with signals from means for measuring the rotating angle intended for enabling said aligning of the light spot along the radius from the centre of revolution of the analysed surface all the scanning line.

Yet one more feature of this analyser is that the housing is made light-absorbing from the inside.

At last, one more feature of this analyser is that the rotating table is provided with three vacuum suckers located symmetrically about the first axis of revolution and intended for mounting the object with the analysed surface on the rotating table.

In the background, objects of the same purpose as claimed ones were not revealed, which would possess all features indicated above of the objects of the present invention. This allows to consider both the method for monitoring the analysed surface and the surface scanning analyser as new ones.

In the background, objects of the same purpose as claimed ones are known, which comprise individual features similar to main features of the claimed method and analyser. Thus, in the US Patents ¹¹ 5377001 and 5377002 (Int.Cl. G 01 N 21/00, 27.12.94), the light spot is shown on the analysed surface (Fig. 7a in each of these patents) in elongated form along the radius from the centre of revolution of the analysed surface; however, in texts of these patents there are no explanations of how it is necessary to align this spot with respect to the scanning line. The movement of the analysed surface along two mutually perpendicular directions is known (EP Application ¹ 0398781, Int.Cl G 01 N 21/88, 22.11.90). A line movement of the assembly with the light source and light sensing unit along the rotating analysed surface is known from the Japan Unexamined Application ¹ 03-163338 (Int.Cl. G 01 N 21/88, 15.07.91). a usage of the rotating housing in the form of the tone arm is known as such from disk turntables. From the Russian Patent ¹ 2064670 (Int.Cl. G 01 N 21/47, 27.07.96) a usage of the gathering mirror in the form of the ellipsoid of revolution is also known. From the USSR Author's Certificate ¹ 1297590 (Int.Cl. G 01 N 21/47, 15.11.86) a usage of the gathering mirror in the form of the paraboloid of revolution is also known. However, there are nowhere in the background of the invention the information on a usage of the rotating housing for placing in it optical elements permitting operations of illuminating of the analysed surface and sensing light beams mirrored and scattered from it, as well as the information on how the light spot must be just aligned on the analysed surface. Therefore, the claimed objects according to the present invention may be considered as having the inventive level.

### Brief description of the drawings

The following description refers to the example of embodiment of the claimed invention for realisation of the claimed method, which is shown in the attached drawings, in which:
Fig. 1 illustrates a structure diagram of the optical-mechanical part of the surface scanning analyser in accordance with the present invention (an example of one embodiment);
Fig. 2 illustrates a structure diagram of the optical-mechanical part of the surface scanning analyser in accordance with the present invention (an example of another embodiment);
Fig. 3 shows the principle of aligning the light spot on the analysed surface;
Fig. 4 is the diagram of the electronic part of the scanning analyser.

### Detailed description of the preferred embodiment of the invention

The method for monitoring the analysed surface according to the present invention can be realised using the scanning analyser made in accordance with the present invention, which example is shown in the attached drawings.

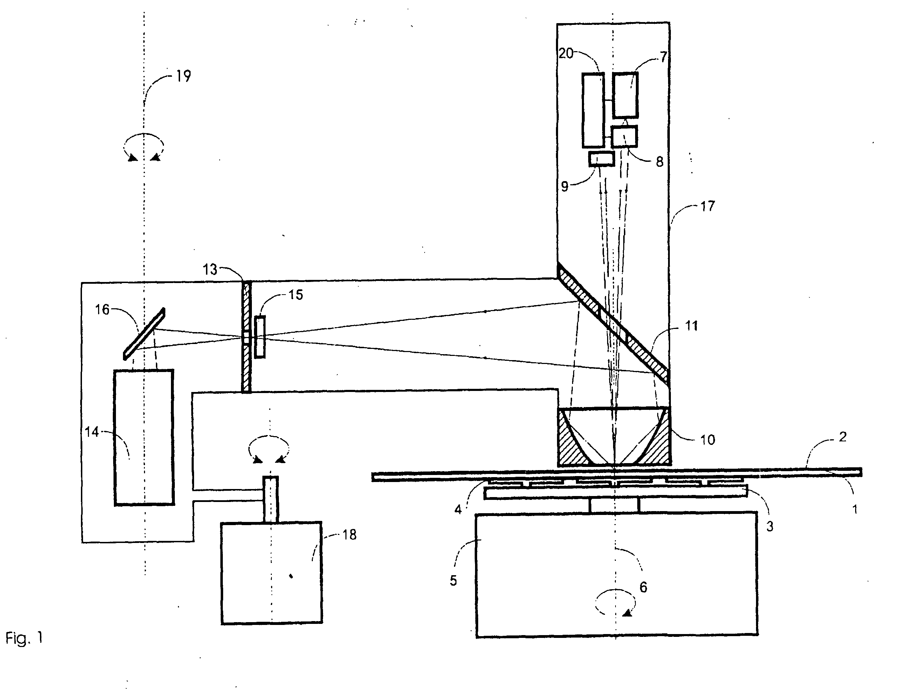

Fig. 1 shows the structure diagram of the optical-mechanical part of the surface scanning analyser in accordance with the present invention. An object 1 with an analysed surface 2 is mounted on the rotating table 3 which is provided with vacuum suckers 4. In using the analyser according to the present invention for monitoring the surface in manufacturing the semiconductor wafers the vacuum suckers are located symmetrically about the centre of revolution of the rotating table 3, i.e. spaced at 120° along the arc about its centre of revolution. The rotating table 3 has a revolving motor 5 (particularly, the stepper) for permitting the revolution of the rotating table about the first axis 6 of revolution.

As already noted above, the present invention utilises the known fact that defects on the smooth surface scatter the incident light sideways while illuminating said surface with a light beam in the direction close to the normal to this surface.

In order to ensure this purpose, the analysed surface 2 is illuminated with a light source 7 which comprises a semiconductor laser. The light from the source 7 is gathered and focused with a lens 8 into a spot on the analysed surface 2. The light source 7 with the lens 8 is disposed over the object 1 when it is mounted on the rotating table 3, so that the light beam onto the analysed surface 2 has a direction close to the normal to this surface. (In Fig. 1 the normal to the analysed surface 2 in its incident point of the light beam from the light source 7 coincides with the first axis of revolution 6, this is done only to make an understanding of the present invention more easy.) Near the light source 7 a first light sensing unit 9 is disposed, which is intended for sensing the light mirrored from the analysed surface 2.

The first light sensing unit 9 can be merely an absorber which prevents for reflecting the light mirror-reflected from the analysed surface 2 back to it. However, this unit as a photodetector 9 can sense the light mirror-reflected from the analysed surface 2 in order to determine the presence of non-scattering defects of different types on the surface of the monitored object 1 (for example, a semiconductor wafer) from a change of the intensity of the light mirror-reflected from the analysed surface 2.

The light scattered by defects presenting on the analysed surface 2 (for example, dust particles on the surface of the semiconductor wafer, defects in the subsurface area, the surface relief) can be directed to different sides at angles different from the normal to the analysed surface 2. In order to use this scattered light in analysing, a gathering mirror 10 is employed made in the form of a body of revolution formed by revolving a second order curve about a second axis of revolution which is parallel to the first axis of revolution and substantially coincides with the normal to the analysed surface erected in its incidence point of said light spot. (In Fig.1 the second axis of revolution coincides with the first axis of revolution 6, but this is done only to make an understanding of the present invention more easy.) For said second order curve, either an ellipse or parabola is selected, one focus of the ellipse or the focus of the parabola coinciding with the incident point of the light from the source 7 onto the analysed surface 2. In order to ensure this, the body of revolution is made truncated, its first section plane being located perpendicularly to the second axis of revolution in the immediate proximity to said focus, and a second section plane of the body of revolution being parallel to its first section plane. A so formed gap between the edge of the gathering mirror 10 located in the first section plane, and the analysed surface 2 enables a free movement of the gathering mirror 10 over the analysed surface 2. The light scattered by defects of the analysed surface falls onto the inner reflecting surface of the gathering mirror 10 and is reflected aside from the analysed surface 2 either parallel to its normal in the case of parabolic shape of the mirror 10, or to the point of another focus in the case of elliptical shape of the gathering mirror 10.

In order to separate the light scattered by defects from the mirror-reflected light, in the present invention a flat mirror 11 with an aperture in its centre is used, which is mounted at an angle to the normal to the analysed surface 2 (to the second axis of revolution about which the above mentioned second order curve, parabola or ellipse, is revolved). This angle in Fig. 1 is 45°, but it may have another value if necessary. The aperture in the centre of the flat mirror 11 enables an unimpeded passing of the light from the light source 7 to the analysed surface 2 and the reflection from it to the first light sensing unit 9. At the same time, the flat mirror 11 reflects the light gathered and reflected by the gathering mirror 10 aside from the direction of propagation of the light from the source 7.

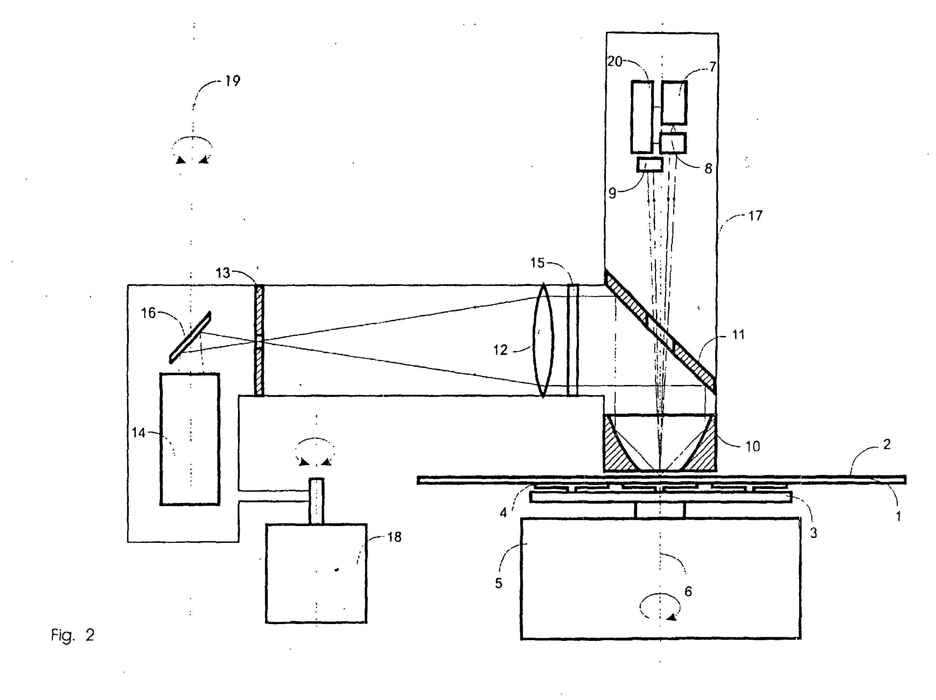

Depending on the type of the second order curve forming the body of revolution of the gathering mirror 10, a further run of beams reflected by the flat mirror 11 is different. In the case of Fig. 2, when the gathering mirror 10 is made in the form of a paraboloid of revolution, propagation lines of the light reflected by it goes parallel. The reflection from the flat mirror 11 retains this parallelism, so, for the following analysis, this light reflected by the flat mirror 11 is gathered with the gathering lens 12. The light focused by it is passed through a diaphragm 13 and entered to a second light sensing unit 14 which can be a photomultiplier and the like. Before the gathering lens 12 the light may be passed through a light filter 15 for choosing the light only with a required wavelength and optionally is the direction of the light is changed by means of an additional mirror 16 when the second light sensing unit 14 is mounted not in the direction onto the flat mirror 11. And in the case of Fig. 1, when the gathering mirror 10 is made in the form of ellipsoid of revolution, the light reflected by it will be gathered in the second focus of this ellipsoid. After reflecting from the flat mirror 11 this second focus will be as if turned and found on one side of the second axis of revolution (the propagation line of the light from the source 7). In so doing, there is no longer any necessity for the gathering lens 12, and the diaphragm 13 is mounted just in the point of the second focus of the ellipsoid of revolution with regard to its displacing due to the reflection from the flat mirror 11. The light filter 15 and additional mirror 16 can be used like in the case of making the gathering mirror 10 in the form of paraboloid of revolution.

According to the present invention, the light source 7, lens 8 gathering mirror 10, flat mirror 11, first and second light sensing units 9, 14, as well as light path elements indicated by numbers 12, 13, 15 and 16 are placed into the housing 17 which can be made light-absorbing from the inside. The housing 17 is provided with a drive (not shown) having a rotating motor 18 (particularly, the stepper) which enables a rotation of the housing 17 about a third axis of revolution 19 parallel to the first axis of revolution 6 and passing off the object 1 with the analysed surface 2 and/or the rotating table 3.

The rotating drive 18 enables movements of the housing 17 so that the a light spot 21 formed by the light source 7 on the analysed surface 2 is moved along an arc 22 passing via the centre 23 of the analysed surface 2 at least to one side from the centre 23 of revolution up to the edge of the analysed surface 2.

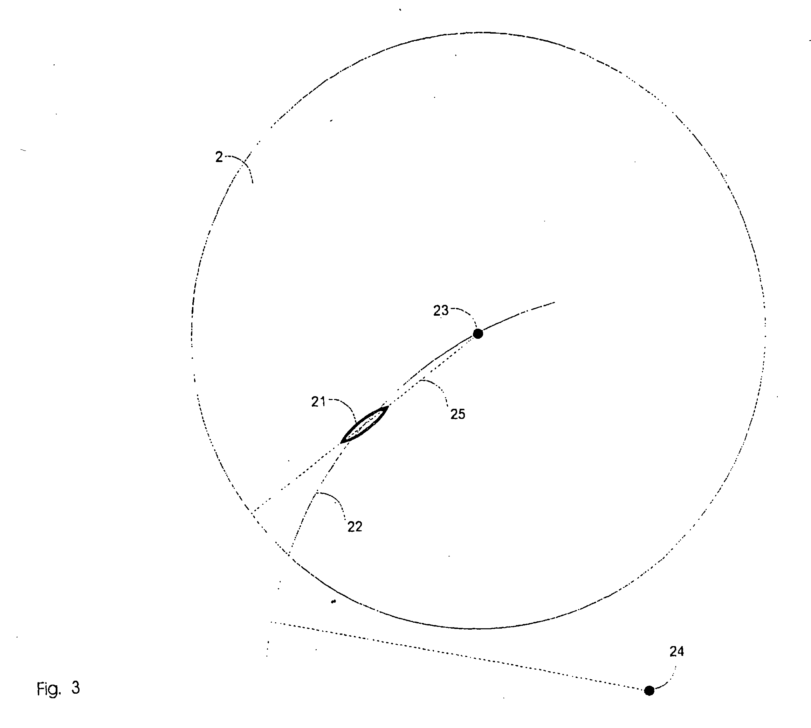

In such movement, the light spot 21 formed on the analysed surface 2 and having an elongated shape will trace the arc 22 about the second centre 24 of revolution (being a projection of the third axis of revolution 19 onto the plane of Fig. 3). In each point of the arc 22 the light spot 21 will be directed at some angle to the radius 25 from the first centre 23 of revolution (being a projection of the first axis of revolution 19 onto the plane of Fig. 3) of the analysed surface 2, which passes via this point. From the point of view of a maximum rate for monitoring the analysed surface 2, the optimum orientation of the light spot is in aligning its maximum size (the long axis of the spot) along the radius 25 passing via that point where the light spot 21 is formed at this moment.

According to the present invention, the light spot 21 having the elongated shape on the analysed surface 2 is aligned, at least in one predetermined position, with its maximum size along a radius 25 from the first centre 23 of rotation through the centre of the spot. Such predetermined position where the radius 25 crosses the arc 22 (a scanning line) can be particularly the middle of the radius 25. I.e., the light source 7 and lens 8 are mounted so as the light spot 21, when forming in the middle of distance from the centre 23 of revolution to the edge of the analysed surface 2, is aligned with its maximum size (the long axis) exactly along the radius 25 from the first centre of rotation 23 through the centre of the spot 21.

However, this is not the only possibility for aligning the light spot 21. Referring to Fig. 1 and 2, the light source 7 and lens 8 can be provided with means 20 for position correction. It may be, for instance, a micromotor (particularly, a stepper). In so doing, the drive with the rotating motor 18 is provided with means for measuring a rotating angle of the housing (not shown) relative to its initial position. Then signals from this means for measuring a rotating angle of the housing, after their corresponding processing, can be fed to the means 20 for position correction which will turn aside the light source 7 with the lens 8 so as to retain the alignment of the light spot 21 along the radius 25 from the first centre 23 of rotation via the light spot all the scanning line (the arc 22).

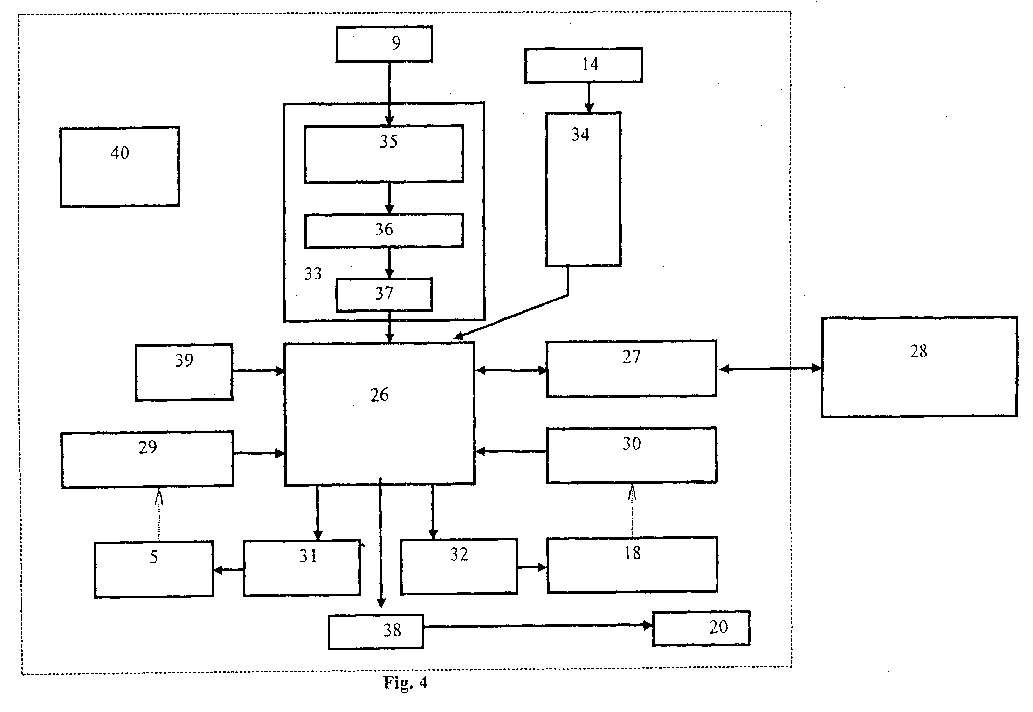

In order to control the operation of the surface scanning analyser according to the present invention, a circuit can be used shown in Fig. 4. This circuit is merely illustrative and serves only to confirm the practicability of the present invention.

In this circuit, a signal processor 26 is connected via a parallel interface 27 to a control computer 28 in which memory a program for operating the surface scanning analyser according to the present invention is stored. This program can be composed in accordance with a list of operations below. The parallel interface carries out the data exchange between the control computer 28 and signal processor 26 in accordance with requirements of the IEEE-1284 Standard, ensuring a compatibility with the majority of computers presently employed. The signal processor 26 is connected with its inputs to a rotating table angle position transducer 29 and housing rotational angle transducer 30 which is in this case an example of embodiment for the above mentioned means for measuring a rotating angle of the housing. The transducers 29 and 30 are coupled mechanically to a shaft of the revolving drive 5 and to a shaft of the rotating drive 18 respectively, the control of which drives is performed on signals from corresponding signal processor outputs connected to a rotating table revolution control unit 31 and housing rotation control unit 32 which both form signals necessary to initiate the specific drive.

Moreover, the diagram of Fig. 4 shows the first 9 and second 14 light sensing units which outputs are connected via respective processing units 33 and 34 to the inputs of the signal processor 26. Each of units 33 and 34 comprises a preamplifier 35, peak detector 36 and analog-to-digital converter 37. If the first light sensing unit 9 is the light absorber (for instance, a non-reflecting surface), then the first processing unit 33 is absent in the diagram of Fig. 4.

The diagram of Fig. 4 can also have a light source rotation control unit 38 connected with its inputs to corresponding outputs of the signal processor 26, and with its outputs to inputs of the means 20 for position correction.

At last, the diagram of Fig. 4 shows a vacuum sensor 39 which can be used in the case of employing the present invention in the manufacture of semiconductor wafers, and power supply unit 40 for all blocks of the surface scanning analyser in accordance with the present invention.

An operation of the surface scanning analyser in accordance with the present invention, during which operation the method for monitoring the analysed surface according to the present invention is realised, is carried out as follows.

The object 1 with the analysed surface 2 (for example, the semiconductor wafer 150, 200 or 300 mm in diameter) is mounted on the rotating table 3 and fixed on it by means of vacuum suckers 4. On signals from corresponding control units, the drive 5 begins to revolve the rotating table 3 together with the object 1, and the drive with the motor 18 begins to rotate the housing 17 over the analysed surface 2 of the object 1. When there is the means for position correction, signals to it from the control unit cause the light source 7 with the lens 8 to turn aside continuously while moving along the arc 22 so as the light spot 21 formed by it on the analysed surface 2 being all the time aligned with its maximum size (its long axis) along the radius 25 from the first centre 23 of revolution, passing via the spot. And if the means 20 for position correction does not employed, it is necessary to set the spot 21 in advance with its long axis along the radius 25 in the given position, for example, when the spot 21 is in the middle of this radius 25.

During the monitoring, i.e. movement of the housing 17 over the revolved analysed surface 2, the light source 7 via the lens 8 forms the light spot 21 on the analysed surface 2 through the aperture in the centre of the flat mirror 11.

If a defect, scattering the light, exists on the microarea of the analysed surface 2, on which the light spot 21 from the light source 7 is formed, then this scattered light falls onto the gathering mirror 10, the reflection from which falls onto the flat mirror 11. The gathering mirror 10 is made in the form of the body of revolution formed by revolving a second order curve, and is mounted so that the focus of said second order curve is placed in the point of forming the light spot 21. If the gathering mirror 10 is made in the form of the paraboloid of revolution, the parallel light beam from the flat mirror 11, when passing the light filter 15 and gathering lens 12, is focused in the aperture of the diaphragm 13 and falls onto the second light sensing unit 14, perhaps with changing again its direction on the additional mirror 16 (in the case, when the second light sensing unit 14 is made in the form of a relatively bulky photomultiplier). And if the gathering mirror 10 is made in the form of the ellipsoid of revolution, the light beam reflected by it, after reflecting from the flat mirror 11 and passing through the light filter 15, is gathered in the "reflected" second focus of the ellipsoid of revolution (without the lens 12 which is absent in this case), in which focus the diaphragm 13 is placed, after which the light falls onto the second light sensing unit 14 As in the case of the paraboloid, in this case it is possible to use the additional mirror 16.

A signal from the second light sensing unit 14 via the processing unit 34 similar to the unit 33 or having a specific embodiment (for instance, without the preamplifier) comes into the signal processor, where it is used for analysing the existence of the defect on the surface of the object 1. The signal outputting from the photomultiplier of the second light sensing unit 14 is practically a sum of two components one of which being proportional to the light scattering caused by a microroughness of the wafer surface and scatter in its subsurface area (dead surface state), and the second component being caused by the presence of particles or other light-scattering defects on the surface. In order to separate said signal components a software is used. This allows a simply realisation of different measurement conditions while retaining a relative simplicity of the device electronics. Thus, in a time of scanning the wafer, a fact of presence of particles in every point of the wafer, sizes of these particles, as well as the dead surface state of the surface are determined.

The data from the signal processor 26 via the parallel interface 27 enter the control computer 28 for utilising in diagnostics of manufactured semiconductor wafers and adjusting the process of their manufacturing.

A signal from the vacuum sensor 39 is utilised by the signal processor 26 for preventing a slippage of the object 1 on the rotating table 3 at an insufficient vacuum in vacuum suckers 4.

It may be envisaged in the program for operating the scanning analyser to switch off the power supply unit 40 from the main blocks - drives 5 and 18, light source 7, photomultiplier of the second light sensing unit 14 - in the absence of the scanning process, which reduces the power consumption and increases the lifetime.

Specific algorithms for processing signals from units 9 and 14 may be any known ones (for example, from the nearest analogue). They are not the subject matter of the present invention and are not involved in the scope of its claims.

### Industrial applicability

The present invention can be used for analysing the surface uniformity of different objects. Particularly, it is suitable in the semiconductor manufacturing for monitoring the quality of the processed semiconductor wafers inside the technology equipment.

The present invention is described above using examples of its embodiment which, however, do not limit possibilities of its realisation and are given only to illustrate the main aspects of the present invention. The scope of claims is defined by the following claims regarding equivalents.

## Claims

1. A method for monitoring a surface to be analysed comprising the steps of:
- performing a rotation of an object (1) with the analysed surface (2) about a first centre of revolution (6);
- forming a light spot on the analysed surface;
- sensing separately a light mirror-reflected and scattered by the analysed surface in the incidence point of the light spot;
***characterised* in that** the method includes steps of:
- performing a movement of the light spot relative to the analysed surface (2) along an arc about a second centre of revolution, which lies off the analysed surface (2);
- aligning, at least in one predetermined position, the light spot having an elongated form on the analysed surface with its maximum size along a radius from the first centre of revolution via the light spot.

2. The method according to the claim 1 ***characterised* in that** in said predetermined position the light spot is located substantially in the middle of said analysed surface radius from the first centre of revolving.

3. The method according to the claim 1 ***characterised* in that** the light spot, during its movement along said arc, is turned aside so as to retain its alignment along the radius from the first centre of revolution (6) via the light spot all the scanning line.

4. The method according to the claim 1 ***characterised* in that** the light scattered by the analysed surface (2) is gathered using a system of mirrors, one of which is made in the form of a truncated ellipsoid of revolution (10), which one axis of revolution substantially coincides with the normal to the analysed surface erected in its incidence point of said light spot, said incidence point being in a first focus of said truncated ellipsoid of revolution which first section plane is located perpendicularly to its axis of revolution in the immediate proximity to said first focus, a second section plane of the ellipsoid of revolution being parallel to its first section plane, and another mirror is a flat mirror (11) having an aperture in its centre arranged at an angle to the axis of revolution of the truncated ellipsoid of revolution, and intended for passing through it the light from the light source (7) to the analysed surface (2) and the light mirror-reflected from it and for reflecting the light scattered by the analysed surface (2) and reflected by the gathering mirror (10) wherein the light reflected by the flat mirror (11) is passed through a light filter (15) and then diaphragmed in a point corresponding to a second focus of said ellipsoid of revolution with regard of reflecting from said flat mirror (11).

5. The method according to the claim 1 ***characterised* in that** the light scattered by the analysed surface (2) is gathered using a system of mirrors, one of which is made in the form of a truncated paraboloid of revolution (10), which axis of revolution substantially coincides with the normal to the analysed surface erected in its incidence point of said light spot, said incidence point being in a focus of said truncated paraboloid of revolution which first section plane is located perpendicularly to its axis of revolution in the immediate proximity to said focus, a second section plane of the paraboloid of revolution being parallel to its first section plane, and another mirror is a flat mirror (11) having an aperture in its centre, arranged at an angle to the axis of revolution of the truncated paraboloid of revolution, and intended for passing through it the light from the light source (7) to the analysed surface (2) and the light mirror-reflected from it and for reflecting the light scattered by the analysed surface (2) and reflected by the gathering mirror (10), wherein the light reflected by the flat mirror (11) is passed through a light filter, (15) gathered using a lens (12) and then diaphragmed in a point of the lens focus.

6. A surface scanning analyser comprising:
- a rotating table for mounting on it an object (1) with an analysed surface (2) and for rotating it about its first axis of revolution (6) that is perpendicular to the analysed surface (2);
- a light source (7) intended for lighting the analysed surface (2) by a light spot at an angle close to the normal to the analysed surface (2);
- a gathering mirror (10) in the form of a truncated body of revolution formed by revolving a second order curve about a second axis of revolution which is parallel to the first axis of revolution and substantially coincides with the normal to the analysed surface erected in its incidence point of said light spot, said incidence point being in the focus of said truncated body of revolution, which first section plane is located perpendicularly to the second axis of revolution in the immediate proximity to said focus, and a second section plane of the body of revolution is parallel to its first section plane,
- a first light sensing unit (9) intended for sensing the light mirror-reflected from the analysed surface and located close to the light source;
- a second light sensing unit (14) intended for sensing the light scattered from the analysed surface and reflected by the gathering mirror;
- a flat mirror (11) having an aperture in its centre, arranged at an angle to the second axis of revolution, and intended for passing through it the light from the light source (7) to the analysed surface (2) and the light mirror-reflected from it to the first light sensing unit (9) and for reflecting the light from the gathering mirror (10) to the second light sensing unit (14);
***characterised* in that**:
- the light source (7), gathering mirror (10), flat mirror (11) with the aperture, and first (9) and second (14) light sensing units are placed in a housing (17) made with a possibility to rotate about a third axis of revolution (19) being parallel to the first axis of revolution (6) and passing off the object (1) with the analysed surface (2) and/or the rotating table (3);
- the light source (7) is mounted so as said light spot having an elongated form on the analysed surface (2) is aligned, at least in one predetermined position, with its maximum size along a radius from the first centre of revolution via the light spot.

7. The analyser according to the claim 6 ***characterised* in that** the first light sensing unit (9) is a light absorber.

8. The analyser according to the claim 6 ***characterised* in that** the first light sensing unit (9) is intended for determining non-scattering defects on the analysed surface (2).

9. The analyser according to the claim 6 ***characterised* in that** the second light sensing unit (14) is intended for sensing the light reflected from the flat mirror (11).

10. The anaiyser according to the claim 6 ***characterised* in that** the body of revolution of the gathering mirror (10) is an ellipsoid of revolution in which second focus with regard of reflecting from the flat mirror (11) a diaphragm (13) is mounted intended for passing through it the light reflected from the flat mirror (11) to the second light sensing unit (14).

11. The analyser according to the claim 10 ***characterised* in that** a light filter (15) is mounted between the flat mirror (11) and the diaphragm (13).

12. The analyser according to the claim 6 ***characterised* in that** the body of revolution of the gathering mirror (10) is a paraboloid of revolution, and a gathering lens (12) and diaphragm (13) are mounted between the flat mirror (11) and the second light sensing unit (14), intended for gathering and passing through them the light mirrored from the flat mirror (11) to the second light sensing unit (14).

13. The analyser according to the claim 12 ***characterised* in that** a light filter (15) is mounted between the flat mirror (11) and the gathering lens (12).

14. The analyser according to the claim 6 ***characterised* in that** it further comprises a drive (18) for rotating the housing to enable a possibility for moving the housing over the analysed surface (2) at least to one side from its centre of revolution.

15. The analyser according to the claim 14 ***characterised* in that** in said predetermined position of the housing (17), said light spot is located substantially in the middle of said analysed surface (2) radius from the centre of its revolution.

16. The analyser according to the claim 14 ***characterised* in that** the drive (18) for rotating the house is provided with means for measuring a rotating angle of the housing, and the light source (7) is provided with means for position correction (20), which is intended for turning aside the light source (7) in accordance with signals from means for measuring the rotating angle intended for enabling said aligning of the light spot along the radius from the centre of revolution of the analysed surface through the centre of the spot all the scanning line.

17. The analyser according to the claim 6 ***characterised* in that** the housing (17) is made light-absorbing from the inside.

18. The analyser according to the claim 6 ***characterised* in that** the rotating table (3) is provided with three vacuum suckers located symmetrically about the first axis of revolution (6) and intended for mounting the object (1) with the analysed surface (2) on the rotating table (3).

## Patentansprüche

1. Verfahren zum Überprüfen einer zu analysierenden Oberfläche (2) mit den Schritten:
- Durchführen einer Drehung eines Gegenstands (1) mit der zu analysierenden Oberfläche (2) um einen ersten Drehmittelpunkt (6);
- Bilden eines Lichtflecks auf der zu analysierenden Oberfläche;
- getrenntes Abtasten des Lichts, das in einem Einfallspunkt des Lichtflecks spiegelreflektiert wurde und das durch die zu analysierende Oberfläche gestreut wurde;
**dadurch gekennzeichnet, dass** das Verfahren die Schritte umfasst:
- Durchführen einer Bewegung des Lichtflecks relativ zu der zu analysierenden Oberfläche (2) entlang einem Bogen um einen zweiten Drehmittelpunkt, der außerhalb der zu analysierenden Oberfläche (2) liegt;
- Ausrichten des Lichtflecks, der eine längliche Form auf der zu analysierenden Oberfläche hat, bei wenigstens einer vorbestimmten Position mit seiner maximalen Größe entlang eines Radius von dem ersten Drehmittelpunkt über den Lichtfleck.

2. Verfahren nach Anspruch 1, **dadurch gekennzeichnet, dass** die vorbestimmte Position des Lichtflecks im Wesentlichen in der Mitte des Radius von dem ersten Drehmittelpunkt der zu analysierenden Oberfläche angeordnet ist.

3. Verfahren nach Anspruch 1, **dadurch gekennzeichnet, dass** der Lichtfleck während seiner Bewegung entlang des Bogens gedreht wird, um seine Ausrichtung entlang des Radius von dem ersten Drehmittelpunkt (6) über den Lichtfleck über die gesamte Abtastlinie zu behalten.

4. Verfahren nach Anspruch 1, **dadurch gekennzeichnet, dass** das von der zu analysierenden Oberfläche (2) gestreute Licht unter Verwendung eines Spiegelsystems gesammelt wird, wobei einer der Spiegel die Form eines abgeschnittenen Drehellipsoids (10) besitzt, dessen Drehachse im Wesentlichen mit der Normalen der zu analysierenden Oberfläche, welche sich von ihrem Einfallspunkt des Lichtflecks aus erstreckt, zusammenfällt, wobei der Einfallspunkt in einem ersten Brennpunkt des abgeschnitten Drehellipsoids liegt, dessen erste Abschnittsebene senkrecht zu seiner Drehachse in unmittelbarer Nähe des ersten Brennpunkts angeordnet ist, eine zweite Abschnittsebene des Drehellipsoids parallel zu seiner ersten Abschnittsebene ist, und wobei ein anderer Spiegel ein ebener Spiegel (11) ist, der in seiner Mitte eine Öffnung besitzt, der mit einem Winkel zu der Drehachse des abgeschnittenen Drehellipsoids angeordnet ist und der so ausgebildet ist, dass durch ihn das Licht von der Lichtquelle (7) auf die zu analysierende Oberfläche (2) und das Licht, das von ihm spiegelreflektiert wird, durchtreten kann und dass das Licht, welches an der zu analysierenden Oberfläche (2) gestreut wird und welches von dem Sammelspiegel (10) reflektiert wird, reflektiert werden kann, wobei das Licht, welches an dem ebenen Spiegel (11) reflektiert wird, durch einen Lichtfilter (15) durchtritt, und dann bei einem Punkt, welcher einem zweiten Brennpunkt des Drehellipsoids bezüglich der Reflektion an dem ebenen Spiegel (11) entspricht, durch eine Blende tritt.

5. Verfahren nach Anspruch 1, **dadurch gekennzeichnet, dass** das Licht, welches durch die zu analysierende Oberfläche (2) gestreut wird, unter Verwendung eines Spiegelsystems gesammelt wird, wobei einer der Spiegel die Form eines abgeschnittenen Drehparaboloids (10) besitzt, dessen Drehachse im Wesentlichen mit der Normalen der zu analysierenden Oberfläche, welche sich von ihrem Einfallspunkt des Lichtflecks aus erstreckt, zusammenfällt, wobei der Einfallspunkt in einem Brennpunkt des abgeschnittenen Drehparaboloids liegt, dessen erste Abschnittsebene senkrecht zu seiner Drehachse in unmittelbarer Nähe des Brennpunkts angeordnet ist, eine zweite Abschnittsebene des Drehparaboloids parallel zu seiner ersten Abschnittsebene ist, und wobei ein anderer Spiegel ein ebener Spiegel (11) ist, der in seiner Mitte eine Öffnung besitzt, der mit einem Winkel zu der Drehachse des abgeschnittenen Drehparaboloids angeordnet ist und der so ausgebildet ist, dass durch ihn das Licht von der Lichtquelle (7) auf die zu analysierende Oberfläche (2) und das Licht, welches von ihm spiegelreflektiert wird, durchtreten kann und dass das Licht, welches an der zu analysierenden Oberfläche (2) gestreut wird und welches von dem Sammelspiegel (10) reflektiert wird, reflektiert werden kann, wobei das Licht, welches durch den ebenen Spiegel (11) reflektiert wird, durch einen Lichtfilter (15) durchtritt, unter Verwendung einer Linse (12) gesammelt wird und dann in einem Punkt des Linsenbrennpunktes durch eine Blende tritt.

6. Oberflächenabtastanalysator umfassend:
- einen Drehtisch zum Befestigen eines Gegenstands (1) mit einer zu analysierenden Oberfläche (2) darauf und zum Drehen desselben um eine erste Drehachse (6), die senkrecht zu der zu analysierenden Oberfläche (2) ist,
- eine Lichtquelle (7), die zum Beleuchten der zu analysierenden Oberfläche (2) durch einen Lichtfleck mit einem Winkel nahe der Normalen der zu analysierenden Oberfläche (2) ausgebildet ist,
- einen Sammelspiegel (10) in Form eines abgeschnitten Drehkörpers, der durch Drehen eine Kurve zweiter Ordnung um eine zweite Drehachse gebildet ist, die parallel zur ersten Drehachse ist und im Wesentlichen mit der Normalen der zu analysierenden Oberfläche zusammenfällt, die sich von dem Einfallspunkt des Lichtfleckes aus erstreckt, wobei der Einfallspunkt im Brennpunkt des abgeschnittenen Drehkörpers liegt, dessen erste Abschnittsebene senkrecht zu der zweiten Drehachse in unmittelbarer Nähe des Brennpunktes angeordnet ist und eine zweite Abschnittsebene des Drehkörpers parallel zu seiner ersten Abschnittsebene ist;
- eine erste Lichtabtasteinheit (9), die zum Abtasten des Lichtes ausgebildet ist, das von der zu analysierenden Oberfläche spiegelreflektiert wird, und die nahe der Lichtquelle angeordnet ist;
- eine zweite Lichtabtasteinheit (14), die zum Abtasten des Lichts ausgebildet ist, das von der zu analysierenden Oberfläche gestreut wird und das durch den Sammelspiegel reflektiert wird;
- einen ebenen Spiegel (11), der in seiner Mitte eine Öffnung hat, der mit einem Winkel zu der zweiten Drehachse angeordnet ist, und so ausgebildet ist, dass durch ihn Licht von der Lichtquelle (7) zu der zu analysierenden Oberfläche (2) und Licht, das von ihr zu der ersten Lichtabtasteinheit (9) spiegelreflektiert wird, durchtreten kann, und dass das Licht von dem Sammelspiegel (10) zu der zweiten Lichtabtasteinheit (14) reflektiert werden kann;
**dadurch gekennzeichnet, dass**:
- die Lichtquelle (7), der Sammelspiegel (10), der ebene Spiegel (11) mit der Öffnung und die erste (9) und die zweite (14) Lichtabtasteinheit in einem Gehäuse (17) angeordnet sind, das so aufgebaut ist, dass es um eine dritte Drehachse (19), die parallel zu der ersten Drehachse (6) ist und die sich außerhalb des Gegenstands (1) mit der zu analysierenden Oberfläche (2) und/oder des Drehtisches (3) befindet, gedreht werden kann;
- die Lichtquelle (7) so angeordnet ist, dass der Lichtfleck, der eine längliche Form auf der zu analysierenden Oberfläche (2) besitzt, wenigstens in einer vorbestimmten Position mit seiner maximalen Größe entlang eines Radius von dem ersten Drehmittelpunkt über den Lichtfleck in Ausrichtung ist.

7. Analysator nach Anspruch 6, **dadurch gekennzeichnet, dass** die erste Lichtabtasteinheit (9) ein Lichtabsorber ist.

8. Analysator nach Anspruch 6, **dadurch gekennzeichnet, dass** die erste Lichtabtasteinheit (9) zum Bestimmen von nichtstreuenden Defekten auf der zu analysierenden Oberfläche (2) ausgebildet ist.

9. Analysator nach Anspruch 6, **dadurch gekennzeichnet, dass** die zweite Lichtantasteinheit (14) zum Abtasten des von dem ebenen Spiegel (11) reflektierten Lichts ausgebildet ist.

10. Analysator nach Anspruch 6, **dadurch gekennzeichnet, dass** der Drehkörper des Sammelspiegels (10) ein Drehellipsoid ist, in dessen zweitem Brennpunkt bezüglich der Reflektion von dem ebenen Spiegel (11) eine Blende (13) angeordnet ist, die so ausgebildet ist, dass durch sie Licht durchtreten kann, das von dem ebenen Spiegel (11) zu der zweiten Lichtabtasteinheit (14) reflektiert wurde.

11. Analysator nach Anspruch 10, **dadurch gekennzeichnet, dass** ein Lichtfilter (15) zwischen dem ebenen Spiegel (11) und der Blende (13) angeordnet ist.

12. Analysator nach Anspruch 6, **dadurch gekennzeichnet, dass** der Drehkörper des Sammelspiegels (10) ein Drehparaboloid ist und eine Sammellinse (12) und eine Blende (13) zwischen dem ebenen Spiegel (11) und der zweiten Lichtabtasteinheit (14) angeordnet sind, die zum Sammeln und Durchtreten des Lichts durch sie ausgebildet sind, das von dem ebenen Spiegel (11) zu der zweiten Lichtabtasteinheit (14) gespiegelt wurde.

13. Analysator nach Anspruch 12, **dadurch gekennzeichnet, dass** ein Lichtfilter (15) zwischen dem ebenen Spiegel (11) und der Sammellinse (12) angeordnet ist.

14. Analysator nach Anspruch 6, **dadurch gekennzeichnet, dass** er ferner einen Antrieb (18) zum Drehen des Gehäuses aufweist, damit das Gehäuse über die zu analysierende Oberfläche (2) zumindest auf einer Seite von ihrem Drehmittelpunkt bewegt werden kann.

15. Analysator nach Anspruch 14, **dadurch gekennzeichnet, dass** in der vorbestimmten Position des Gehäuses (17) der Lichtfleck im Wesentlichen in der Mitte des Radius der zu analysierenden Oberfläche (2) von dem Drehmittelpunkt angeordnet ist.

16. Analysator nach Anspruch 14, **dadurch gekennzeichnet, dass** der Antrieb (18) zum Drehen des Gehäuses mit Mitteln zum Messen des Drehwinkels des Gehäuses versehen ist und die Lichtquelle (7) mit Mitteln zur Positionskorrektur (20) versehen ist, die zum Drehen der Lichtquelle (7) gemäß Signalen von den Mitteln zum Messen des Drehwinkels ausgebildet sind, so dass das Ausrichten des Lichtflecks entlang des Radius von dem Drehmittelpunkt der zu analysierenden Oberfläche über dem Mittelpunkt des Fleckes über die gesamte Abtastlinie ermöglicht wird.

17. Analysator nach Anspruch 6, **dadurch gekennzeichnet, dass** das Gehäuse (17) innen lichtabsorbierend ist.

18. Analysator nach Anspruch 6, **dadurch gekennzeichnet, dass** der Drehtisch (3) mit drei Vakuumsaugern versehen ist, die symmetrisch um die Drehachse (6) angeordnet sind und zum Befestigen des Gegenstandes (1) mit der zu analysierenden Oberfläche (2) auf dem Drehtisch (3) ausgebildet sind.

## Revendications

1. Procédé pour surveiller une surface à analyser (2), comprenant les étapes consistant à :
-- exécuter une rotation d'un objet (1) avec la surface analysée (2) autour d'un premier centre de rotation (6) ;
-- former une tache lumineuse sur la surface analysée ;
-- détecter séparément une lumière réfléchie par effet miroir et une lumière diffusée par la surface analysée au point d'incidence de la tache lumineuse ;
**caractérisé en ce que** le procédé inclut les étapes consistant à :
-- exécuter un mouvement de la tache lumineuse par rapport à la surface analysée (2) le long d'un arc autour d'un second centre de rotation, lequel est disposé à l'extérieur de la surface analysée (2) ; et
-- aligner, au moins dans une position prédéterminée, la tache lumineuse ayant une forme allongée sur la surface analysée, avec sa taille maximum le long d'un rayon depuis le premier centre de rotation via la tache lumineuse.

2. Procédé selon la revendication 1, **caractérisé en ce que** dans ladite position prédéterminée, la tache lumineuse est située sensiblement au milieu dudit rayon de la surface analysée depuis le premier centre de rotation.

3. Procédé selon la revendication 1, **caractérisé en ce que** la tache lumineuse, pendant son mouvement le long dudit arc, est tournée vers le côté de manière à conserver son alignement le long du rayon depuis le premier centre de rotation (6) via la tache lumineuse sur toute la ligne de balayage.

4. Procédé selon la revendication 1, **caractérisé en ce que** la lumière diffusée par la surface analysée (2) est collectée en utilisant un système de miroir, un de ces systèmes étant réalisé sous la forme d'un ellipsoïde de révolution tronqué (10) avec un axe de révolution qui coïncide sensiblement avec la perpendiculaire à la surface analysée, érigé au point d'incidence de ladite tache lumineuse, ledit point d'incidence étant à un premier foyer dudit ellipsoïde de révolution tronqué, dont le premier plan de section est situé perpendiculairement à son axe de révolution à proximité immédiate dudit premier foyer, et un second plan de section de l'ellipsoïde de révolution étant parallèle au premier plan de section, et un autre système de miroir est un miroir plan ayant une ouverture en son centre (11) agencée sous un angle par rapport à l'axe de révolution de l'ellipsoïde de révolution tronquée, et destinée à laisser passer la lumière provenant de la source lumineuse (7) vers la surface analysée (2), ainsi que la lumière réfléchie par effet miroir depuis cette surface, et pour réfléchir la lumière diffusée par la surface analysée (2) et réfléchie par le miroir collecteur (10), dans lequel la lumière réfléchie par le miroir plan (11) est amenée à passer à travers un filtre de lumière (15), puis collimatée en un point correspondant à un second foyer dudit ellipsoïde de révolution par rapport à la réflexion depuis ledit miroir plan (11 ).

5. Procédé selon la revendication 1, **caractérisé en ce que** la lumière diffusée par la surface analysée (2) est collectée en utilisant un système de miroir, l'un de ces systèmes étant réalisé sous la forme d'un paraboloïde de révolution tronqué (10) dont l'axe de révolution coïncide sensiblement avec la perpendiculaire à la surface analysée, érigé en son point d'incidence de ladite tache lumineuse, ledit point d'incidence étant à un foyer dudit paraboloïde de révolution tronqué, dont le premier plan de section est situé perpendiculairement à son axe de révolution à proximité immédiate dudit foyer, et un second plan de section du paraboloïde de révolution étant parallèle à son premier plan de section, et un autre système de miroir est un miroir plan (11) ayant une ouverture en son centre, agencée sous un angle par rapport à l'axe de révolution du paraboloïde de révolution tronqué, et destinée à laisser passer la lumière provenant de la source lumineuse (7) vers la surface analysée (2), ainsi que la lumière réfléchie par effet miroir depuis cette surface, et pour réfléchir la lumière diffusée par la surface analysée (2) et réfléchie par le miroir collecteur (10), dans lequel la lumière réfléchie par le miroir plan (11) est amenée à passer à travers un filtre de lumière (15), regroupée en utilisant une lentille (12), puis collimatée en un point au foyer de la lentille.

6. Analyseur à balayage de surface, comprenant :
-- une table rotative pour monter sur celle-ci un objet (1) avec une surface analysée (2) et pour le faire tourner autour de son premier axe de révolution (6) qui est perpendiculaire à la surface analysée (2) ;
-- une source lumineuse (7) destinée à illuminer la surface analysée (2) par une tache lumineuse sous un angle proche de la perpendiculaire à la surface analysée (2) ;
-- un miroir collecteur (10) sous la forme d'un corps de révolution tronqué formé en faisant tourner une courbe du second ordre autour d'un second axe de révolution qui est parallèle au premier axe de révolution et qui coïncide sensiblement avec la perpendiculaire à la surface analysée, érigé au point d'incidence de ladite tache lumineuse, ledit point d'incidence étant au foyer dudit corps de révolution tronqué, dont le premier plan de section est situé perpendiculairement au second axe de révolution à proximité immédiate dudit foyer, et un second plan de section du corps de révolution est parallèle à son premier plan de section ;
-- une première unité de détection de lumière (9) destinée à détecter la lumière réfléchie par effet miroir depuis la surface analysée et située à proximité de la source lumineuse ;
-- une seconde unité de détection de lumière (14) destinée à détecter la lumière diffusée depuis la surface analysée et réfléchie par le miroir collecteur ;
-- un miroir plan (11) ayant une ouverture en son centre, agencé sous un angle par rapport au second axe de révolution, et destiné à laisser passer la lumière provenant de la source lumineuse (7) vers la surface analysée (2), ainsi que la lumière réfléchie par effet miroir depuis cette surface vers la première unité de détection de lumière (9) et pour réfléchir la lumière provenant du miroir collecteur (10) vers la seconde unité de détection de lumière (14) ;
**caractérisé en ce que** :
-- la source lumineuse (7), le miroir collecteur (10), le miroir plan (11) avec l'ouverture, et la première (9) et la seconde unité de détection de lumière (14) sont placés dans un boîtier (17) réalisé avec une possibilité de tourner autour d'un troisième axe de révolution (19) qui est parallèle au premier axe de révolution (6) et qui passe à l'extérieur de l'objet (1) avec la surface analysée (2) et/ou la table rotative (3) ; et
-- la source lumineuse (7) est montée de telle manière que ladite tache lumineuse de forme allongée sur la surface analysée (2) est alignée, au moins dans une position prédéterminée, avec sa taille maximum le long d'un rayon depuis le premier centre de révolution via la tache lumineuse.

7. Analyseur selon la revendication 6, **caractérisé en ce que** la première unité de détection de lumière (9) est un absorbeur de lumière.

8. Analyseur selon la revendication 6, **caractérisé en ce que** la première unité de détection de lumière (9) est destinée à déterminer les défauts de non-diffusion sur la surface analysée (2).

9. Analyseur selon la revendication 6, **caractérisé en ce que** la seconde unité de détection de lumière (14) est destinée à détecter la lumière réfléchie depuis le miroir plan (11).

10. Analyseur selon la revendication 6, **caractérisé en ce que** le corps de révolution du miroir collecteur (10) est un ellipsoïde de révolution dans lequel, au second foyer vis-à-vis de la réflexion provenant du miroir plan (11), un diaphragme (13) est monté et destiné à laisser passer la lumière réfléchie depuis le miroir plan (11) vers la seconde unité de détection de lumière (14).

11. Analyseur selon la revendication 10, **caractérisé en ce qu'**un filtre à lumière (15) est monté entre le miroir plan (11) et le diaphragme (13).

12. Analyseur selon la revendication 6, **caractérisé en ce que** le corps de révolution du miroir collecteur (10) est un paraboloïde de révolution, et une lentille collectrice (12) et un diaphragme (13) sont montés entre le miroir plan (11) et la seconde unité de détection de lumière (14), destinés à collecter et à laisser passer la lumière réfléchie depuis le miroir plan (11 ) vers la seconde unité de détection de lumière (14).

13. Analyseur selon la revendication 12, **caractérisé en ce qu'**un filtre à lumière (15) est monté entre le miroir plan (11) et la lentille collectrice (12).

14. Analyseur selon la revendication 6, **caractérisé en ce qu'**il comprend en outre un entraînement (18) pour mettre en rotation le boîtier et donner une possibilité de déplacer le boîtier au-dessus de la surface analysée (2) sur au moins un côté depuis son centre de révolution.

15. Analyseur selon la revendication 14, **caractérisé en ce que**, dans ladite position prédéterminée du boîtier (17), ladite tache lumineuse est située sensiblement au milieu du rayon de ladite surface analysée (2) depuis le centre de sa révolution.

16. Analyseur selon la revendication 14, **caractérisé en ce que** l'entraînement (18) pour mettre en rotation le boîtier est doté de moyens pour mesurer un angle de rotation du boîtier, et la source lumineuse (7) est dotée de moyens en vue d'une correction de position (20), lesquels sont destinés à faire tourner de côté la source lumineuse (7) conformément à des signaux provenant des moyens pour mesurer l'angle de rotation, dans le but de permettre ledit alignement de la tache lumineuse le long du rayon depuis le centre de révolution de la surface analysée en traversant le centre de la tache sur toute la ligne de balayage.

17. Analyseur selon la revendication 6, **caractérisé en ce que** le boîtier (17) est réalisé de manière à absorber la lumière depuis l'intérieur.

18. Analyseur selon la revendication 6, **caractérisé en ce que** la table rotative (3) est pourvue de trois ventouses sous vide situées symétriquement autour du premier axe de révolution (6) et destinées à monter l'objet (1) avec la surface analysée (2) sur la table rotative (3).
